# EUROPEAN PATENT SPECIFICATION

(11) **EP 2 823 296 B1**
(45) Date of publication and mention of the grant of the patent: **18.10.2017**
(21) Application number: 13757253.3
(22) Date of filing: 28.02.2013
(51) Int. Cl.: G01N 33/00, A01N 25/04, A01N 37/40, A01N 39/04, A01N 43/40

(54) **ORGANIC COLLOID-STABILIZED EMULSION FOR CONTROLLING PESTICIDE SPRAY DRIFT**
ORGANISCHE KOLLOIDSTABILISIERTE EMULSION ZUR STEUERUNG DES ABDRIFTENS EINES PESTIZIDSPRITZMITTELS
ÉMULSION STABILISÉE AUX COLLOÏDES ORGANIQUE PERMETTANT DE RÉGULER LA DÉRIVE DE PULVÉRISATION DE PESTICIDES

(30) Priority: 08.03.2012 US 201261608141 P
(43) Date of publication of application: 14.01.2015
(73) Proprietor: Dow AgroSciences LLC, Indianapolis, IN 46268 (US)
(72) Inventor: SHAO, Hui, Carmel, IN 46074 (US); ZHANG, Hong, Indianapolis , IN 46032 (US); TANK, Holger, Zionsville, IN 46077 (US); LI, Mei, Westfield, IN 46074 (US); QIN, Kuide, Westfield, IN 46074 (US); LIU, Lei, Carmel, IN 46032 (US); WILSON, Stephen L., Zionsville, IN 46077 (US)
(74) Representative: f & e patent
(86) International application number: PCT/US2013/028219
(87) International publication number: WO 2013/134035

(56) References cited:
- WO-A1-2012/151455
- WO-A2-2009/112836
- CA-A- 1 023 264
- US-A- 3 408 175
- US-A1- 2011 301 033
- US-A1- 2012 045 497

## Description

### BACKGROUND

Agricultural spraying by economical and available technologies uses hydraulic spray nozzles that inherently produce a wide spectrum of spray droplet sizes. The potential for these spray droplets to drift from the initial, desired site of application is found to be a function of droplet size, with smaller droplets having a higher propensity for off-target movement. Significant research efforts, involving numerous field trials, wind tunnel tests and subsequent generation of predictive math models have led to a greatly enhanced understanding of the relationship between spray droplet size and potential for off-target drift. Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of <156 microns (µm) as the fraction of the spray droplet distribution that contributes to drift. Robert Wolf (Wolf, R. E., Minimizing Spray Drift, December 15, 1997, Microsoft^{®} PowerPoint Presentation, *available at* www.bae.ksu.edu/faculty/wolf/drift.htm, *last viewed* January 26, 2012) cites a value of <200 µm as the driftable fraction. A good estimation of droplet size likely to contribute to drift, therefore, is the fraction below about 150 µm.

CA 1023264 describes a method of controlling drift of aqueous systems of pesticides in the spray application by incorporating a latex colloid stabilized water-in-oil emulsion. The negative consequences of off-target movement can be quite pronounced. Some herbicides have demonstrated very sensitive phytotoxicity to particular plant species at extremely low parts per million (ppm) or even parts per billion (ppb) levels, resulting in restricted applications around sensitive crops, orchards, and residential plantings. For example, the California Dept of Pesticide Regulation imposes buffers of 0.81-3.22 km (0.5-2 miles) for propanil containing herbicides applied aerially in the San Joaquin valley.

### SUMMARY

Spray drift during aqueous pesticide application can be reduced by incorporating an organic colloid-stabilized oil-in-water emulsion into an aqueous pesticidal spray mixture. Methods and compositions to reduce spray drift during the application of an aqueous pesticidal spray mixture are described herein. The methods to reduce spray drift during the application of an aqueous pesticidal spray mixture containing a pesticide include incorporating into the aqueous pesticidal spray mixture from 0.01 to 10 weight percent of an organic colloid-stabilized oil-in-water emulsion.

Additionally, aqueous concentrate compositions are described that include from 0.1 to 95 weight percent of a water soluble salt of at least one pesticide and from 0.01 to 20 weight percent of an organic colloid-stabilized oil-in-water emulsion.

### DETAILED DESCRIPTION

Methods and compositions to reduce spray drift are described herein. The methods and compositions reduce the amount of driftable fines of a pesticide spray in both aerial and ground spray applications. The methods include the use of aqueous pesticidal spray mixtures incorporating organic colloid-stabilized oil-in-water emulsions and one or more pesticides. As used herein the term organic colloid refers to an organic material dispersed as solid microscopic particles in a continuous water phase. Such organic particles may comprise synthetic polymers, latexes, natural waxes, paraffinic waxes, and the like, and may have an average particle size that ranges from 0.001 micron (µm) to 1000 µm. The term latex as used herein refers to a dispersion of synthetic polymer particles in water that are formed by polymerizing a monomer or a mixture of monomers such as, for example, styrene that has been emulsified with surfactants. The aqueous pesticidal spray mixtures described herein can include herbicides, insecticides, or fungicides. Herbicides useful with the methods and compositions described herein include auxinic herbicides such as, for example, clopyralid, triclopyr, 2,4-D, 2,4-DB, MCPA, MCPB, dicamba, aminopyralid, picloram, or mixtures thereof. The methods described herein are most particularly useful for the application of herbicides that are subject to restricted applications around sensitive crops such as spray mixtures containing glyphosate, 2,4-D, triclopyr, dicamba, or mixtures thereof.

The organic colloid-stabilized oil-in-water emulsions useful with the methods and compositions described herein may be prepared from a water-insoluble oil, an organic colloid, and water. As used herein, water-insoluble oil refers to an oil that is immiscible with water and has a very low solubility in water, typically less than 2000 parts per million (ppm). The oil can be, for example, paraffinic oil, aliphatic oil, aromatic oil, vegetable oil, seed oil or animal oil, or monoesters derived from vegetable, seed or animal oils, or mixtures thereof. Organic colloids suitable for use with the methods and composition described herein include polymer, co-polymer and wax dispersions, and latexes. The organic colloid may be a cationic organic colloid, an anionic organic colloid, or a nonionic organic colloid. Polymer, co-polymer, and wax dispersions suitable as organic colloids for use with the methods and compositions described herein include, for example, polyethylene dispersions, ethylene-acrylic acid copolymer dispersions, paraffin wax dispersions, carnauba wax dispersions, and mixtures thereof. Latexes suitable as organic colloids for use with the methods and compositions described herein include synthetic polymer and copolymer latexes prepared from monomers or mixtures of monomers such as, for example, styrene, methyl methacrylate and other methacrylate esters, vinyl acetate, butadiene, acrylate esters such as ethyl acrylate, butyl actylate and 2-ethylhexyl acrylate, acrylonitrile, vinyl chloride, vinylidene chloride, acrylic acid, methacrylic acid, and itaconic acid.

As used herein an organic colloid-stabilized oil-in-water emulsion refers to a 2-phase, homogeneous liquid mixture formed by mixing together two immiscible liquids, a water-insoluble oil and water, in the presence of an organic colloid. A smaller volume of the oil is typically dispersed as tiny droplets (i.e., the dispersed phase) in a larger volume of the water (i.e., the continuous phase) with a suitable amount of mixing energy and in the presence of the organic colloid to form the organic colloid-stabilized oil-in-water emulsion commonly known as a Pickering emulsion. The organic colloid serves to stabilize or inhibit conversion of the oil-in-water emulsion back into the two immiscible liquids from which it was formed. Pickering emulsions may in some instances offer improved stability over surfactant stabilized oil-in-water emulsions.

The organic colloid-stabilized oil-in-water emulsion can be incorporated into the aqueous pesticidal spray mixture, for example, by being tank-mixed directly with the diluted pesticidal formulation. The organic colloid-stabilized oil-in-water emulsion may be incorporated into the aqueous pesticidal spray mixture at a concentration from 0.01 to 10 weight percent of the final spray mixture. Additional examples of concentrations for the organic colloid-stabilized oil-in-water emulsion incorporated into the aqueous pesticidal spray mixture include, from 0.01 to 9 weight percent of the final spray mixture, from 0.01 to 8 weight percent of the final spray mixture, from 0.01 to 7 weight percent of the final spray mixture, from 0.01 to 6 weight percent of the final spray mixture, from 0.01 to 5 weight percent of the final spray mixture, from 0.01 to 4.5 weight percent of the final spray mixture, from 0.01 to 4 weight percent of the final spray mixture, from 0.01 to 3.5 weight percent of the final spray mixture, from 0.01 to 3 weight percent of the final spray mixture, from 0.01 to 2.5 weight percent of the final spray mixture, from 0.01 to 2 weight percent of the final spray mixture, from 0.01 to 1.5 weight percent of the final spray mixture, and from 0.05 to about 1 weight percent of the final spray mixture.

The aqueous pesticidal spray mixtures disclosed herein may include insecticides, herbicides, herbicide safeners, or fungicides and the aqueous pesticidal spray mixtures may be applied for the control of unwanted plants, fungi, or insects at levels dependent on the concentration of the active ingredient needed to control the target pest.

The aqueous pesticidal spray mixtures as described herein may be applied in conjunction with one or more other active ingredients to control a wider variety of unwanted plants, fungi, or insects. When used in conjunction with the other active ingredients, the presently claimed compositions can be formulated with the other active ingredient or active ingredients as premix concentrates, tank mixed with the other active ingredient or active ingredients for spray application, or applied sequentially with the other active ingredient or active ingredients in separate spray applications.

An example of a composition as described herein that may be used in conjunction with another active ingredient comprises an aqueous pre-mix concentrate containing a mixture of glyphosate and an auxinic herbicide such as a water soluble salt of 2,4-D, a water soluble salt of triclopyr, a water soluble salt of dicamba, or mixtures thereof. Such aqueous pre-mix herbicidal concentrates may be diluted from 1 to 2000 fold in water at the point of use depending on the agricultural practices and used in pre-emergent and post-emergent spray applications to control weeds in crops.

In some situations, the aqueous pesticidal spray mixtures may contain one or more biocides. Biocides may be present in the composition from about 0.001 wt% to about 0.1 wt%. For further example, the one or more biocides may be present in the composition at 0.001 wt% to 0.1 wt%, 0.005 wt% to 0.1 wt%, 0.01 wt% to 0.1 wt%, 0.02 wt% to 0.1 wt%, 0.03 wt% to 0.1 wt%, 0.04 wt% to 0.1 wt%, 0.05 wt% to 0.1 wt%, 0.06 wt% to 0.1 wt%, 0.07 wt% to 0.1 wt%, 0.08 wt% to 0.1 wt%, or 0.09 wt% to 0.1 wt%. Examples of biocides include, but are not limited to, bactericides, viricides, fungicides, parasiticides, and the like. Examples of biocide active ingredients include, but are not limited to, phenol compounds (such as phenol, thymol, pentachlorophenol, cresol, and p-chloro-m-xylenol), aldehydic compounds (such as formaldehyde, glutaraldehyde, and paraformaldehyde), acid compounds (such as benzoic acid, sorbic acid, mucochloric acid, and mucobromic acid), esters of p-hydroxybenzoic acid (such as methyl-p-hydroxybenzoate and butyl-p-hydroxybenzoate), rare earth salts, amines, disulfides, heterocyclic compounds (such as thiazinium salts, thiazolinones, and benzimidazoles), quaternary ammonium salts, organic mercury compounds, hexamethylenebiguanide hydrochlorides, benzalkonium chlorides, polyamino propylbiguanides, and 1-2-benzisothiazoline-3-ones. For specific example, an aqueous pesticidal spray mixture may comprise Proxel^{®} GXL (Arch Chemicals Inc., Atlanta, GA) as a biocide.

Suitable active ingredients for use in the aqueous pesticidal spray mixtures described herein include herbicides such as, for example, auxinic herbicides (such as 2,4-D, 2,4-DB, aminopyralid, clopyralid, dicamba, fluroxypyr, halauxifen, halauxifen-methyl, MCPA, MCPB, picloram or triclopyr), acetochlor, atrazine, benfluralin, clethodim, cloransulam, cyhalofop, diclosulam, dithiopyr, ethalfluralin, florasulam, flumetsulam, glufosinate, glyphosate, haloxyfop, isoxaben, MSMA, oryzalin, oxyfluorfen, pendimethalin, penoxsulam, propanil, pyroxsulam, quizalofop, sethoxydim, tebuthiuron, and trifluralin, Suitable active ingredients for use in the described compositions also include herbicide safeners such as, for example, cloquintocet, flurazole, mefenpyr, and TI-35. Suitable active ingredients for use in the described compositions also include insecticides such as, for example, chlorpyrifos, chlorpyrifos-methyl, *gamma*-cyhalothrin, cypermethrin, deltamethrin, halofenozide, methoxyfenozide, sulfoxaflor, spinosad, spinetoram, and tebufenozide. Suitable active ingredients for use in the described compositions also include fungicides such as, for example, fenbuconazole, mancozeb, myclobutanil, propiconazole, quinoxyfen, thifluzamide, and zoxamide.

When the aqueous pesticidal spray mixtures described herein contain water soluble salts of auxinic herbicides and/or the water soluble salt of glyphosate, suitable cations contained in these salts include isopropyl ammonium, dimethyl ammonium, triethyl ammonium, monoethanol ammonium, diethanol ammonium, triethanol ammonium, dimethylethanol ammonium, diethyleneglycol ammonium, triisopropanol ammonium, tetramethyl ammonium, tetraethyl ammonium, choline, potassium, and cations derived from bis(aminopropyl)methylamine. For example, useful 2,4-D salts include the 2,4-D choline salt and the 2,4-D dimethyl ammonium salt, and useful glyphosate salts include the glyphosate dimethyl ammonium salt, the glyphosate isopropyl ammonium salt, and the glyphosate potassium salt.

In an example of an aqueous pesticidal spray mixture, the auxinic herbicide is 2,4-D choline salt or 2,4-D dimethyl ammonium salt and the glyphosate is glyphosate dimethyl ammonium salt, glyphosate isopropyl ammonium salt, or glyphosate potassium salt. In another example of an aqueous pesticidal spray mixture, the auxinic herbicide is 2,4-D choline salt or 2,4-D dimethyl ammonium salt, the glyphosate is glyphosate dimethyl ammonium salt, glyphosate isopropyl ammonium salt, or glyphosate potassium salt, and the organic colloid is an anionic carnauba wax dispersion, a nonionic polyethylene dispersion, or a nonionic ethylene acrylic acid copolymer dispersion. In a further example of an aqueous pesticidal spray mixture, the auxinic herbicide is 2,4-D choline salt, the glyphosate is glyphosate dimethyl ammonium salt, and the organic colloid is a nonionic polyethylene dispersion.

The optimum spray droplet size depends on the application for which the pesticidal composition is used. If droplets are too large, there will be less coverage by the spray; i.e, large droplets will land in certain areas while areas in between will receive little or no spray coverage. The maximum acceptable droplet size may depend on the amount of composition being applied per unit area and the need for uniformity in spray coverage. Smaller droplets provide more even coverage, but are more prone to drift during spraying. Thus, application parameters such as uniformity in spray coverage must be balanced against the tendency for smaller droplets to drift. For example, if it is particularly windy during spraying, larger droplets may be needed to reduce drift, whereas on a calmer day smaller droplets may be acceptable.

In addition to the physical properties of a particular aqueous pesticidal composition, spray droplet size may also depend on the spray apparatus, e.g., nozzle size and configuration. The reduction in spray drift may result from a variety of factors including a reduction in the production of fine spray droplets (<150 µm minimum diameter) and an increase in the volume median diameter (VMD) of the spray droplets. In any event, for a given spray apparatus, application, and conditions, and based on the organic colloid-stabilized oil-in-water emulsion used , the median diameter of the plurality of spray droplets created using the compositions and methods described herein is increased above that of a spray composition that does not include the organic colloid-stabilized oil-in-water emulsion as described herein.

In addition to the methods described above, aqueous concentrate compositions are also described. As used herein aqueous concentrate compositions are solutions containing high concentrations of an aqueous pesticidal spray component described above, i.e., one or more water soluble auxinic herbicide salts and an organic colloid-stabilized oil-in-water emulsion. The aqueous concentrate compositions are intended to be diluted to provide aqueous pesticidal spray mixtures for use, for example, with the methods described herein. The aqueous concentrate compositions include from 0.1 to 95 weight percent of one or more water soluble salts of an auxinic herbicide and from 0.01 to 20 weight percent of an organic colloid-stabilized oil-in-water emulsion. The aqueous concentrate compositions can additionally include glyphosate. In aqueous concentrate compositions as described herein that additionally include glyphosate, the aqueous concentrate compositions contain about 10 to about 45 weight percent of the water soluble glyphosate salt; about 10 to about 45 weight percent of the one or more water soluble auxinic herbicide salts; and 0.1 to 18 weight percent of the organic colloid-stabilized oil-in-water emulsion, 0.1 to 16 weight percent of the organic colloid-stabilized oil-in-water emulsion, 0.1 to 14 weight percent of the organic colloid-stabilized oil-in-water emulsion, 0.1 to 12 weight percent of the organic colloid-stabilized oil-in-water emulsion, 0.1 to 10 weight percent of the organic colloid-stabilized oil-in-water emulsion, 0.1 to 9 weight percent of the organic colloid-stabilized oil-in-water emulsion, 0.1 to 8 weight percent of the organic colloid-stabilized oil-in-water emulsion, 0.1 to 7 weight percent of the organic colloid-stabilized oil-in-water emulsion, 0.1 to 6 weight percent of the organic colloid-stabilized oil-in-water emulsion, 0.1 to 5 weight percent of the organic colloid-stabilized oil-in-water emulsion, 0.1 to 4.5 weight percent of the organic colloid-stabilized oil-in-water emulsion, 0.1 to 4 weight percent of the organic colloid-stabilized oil-in-water emulsion, 0.1 to 3.5 weight percent of the organic colloid-stabilized oil-in-water emulsion, 0.1 to 3 weight percent of the organic colloid-stabilized oil-in-water emulsion, 0.1 to 2.5 weight percent of the organic colloid-stabilized oil-in-water emulsion, 0.1 to 2 weight percent of the organic colloid-stabilized oil-in-water emulsion, 0.1 to 1.5 weight percent of the organic colloid-stabilized oil-in-water emulsion, or 0.1 to 1 weight percent of the organic colloid-stabilized oil-in-water emulsion. The aqueous concentrate compositions can be stored in suitable containers as will be readily recognized by one of skill in the art and can be, for example, solutions, emulsions, or suspensions.

In an example of an aqueous concentrate composition, the auxinic herbicide is 2,4-D choline salt or 2,4-D dimethyl ammonium salt and the glyphosate is glyphosate dimethyl ammonium salt, or glyphosate isopropyl ammonium salt. In another example of an aqueous concentrate composition, the auxinic herbicide is 2,4-D choline salt or 2,4-D dimethyl ammonium salt, the glyphosate is glyphosate dimethyl ammonium salt, or glyphosate isopropyl ammonium salt, and the organic colloid is an anionic carnauba wax dispersion, a nonionic polyethylene dispersion, or a nonionic ethylene acrylic acid copolymer dispersion. In a further example of an aqueous concentrate composition, the auxinic herbicide is 2,4-D choline salt, the glyphosate is glyphosate dimethyl ammonium salt, and the organic colloid is a nonionic polyethylene dispersion.

Aqueous solutions, i.e., including both concentrates and spray solutions, containing 2,4-D and glyphosate are prone to incompatibility under certain conditions and concentrations leading to product performance issues and difficulty in using the products, i.e., difficulty with field applications of the products. Incompatibility in concentrate compositions is minimized by the use of very small amounts of 2,4-D, such as less than about 3 wt% ae (acid equivalent) relative to the total composition. High-strength aqueous compositions of certain organo ammonium salts of 2,4-D and glyphosate where the weight ratio (ae basis) of the 2,4-D salt to the glyphosate salt is from about 2.3:1 to about 1:2.3 and the compositions may contain up to or greater than 450 g ae/L of total active ingredients are described in U.S. Application Serial No. 12/763,566, which is incorporated herein by reference. These compositions are generally homogeneous and free-flowing at temperatures ranging from 54 °C to about -10 °C.

Optionally, the compositions described herein may additionally contain surfactants. For example, compositions as described that include glyphosate can optionally include an efficacy enhancing surfactant. The surfactants may be anionic, cationic, or nonionic in character. Examples of typical surfactants include alcohol-alkylene oxide addition products, such as tridecyl alcohol-C₁₆ ethoxylate; sorbitol esters, such as sorbitol oleate; quaternary amines, such as lauryl trimethylammonium chloride; ethoxylated amines, such as tallowamine ethoxylated; betaine surfactants, such as cocoamidopropyl betaine; fatty acid amidopropyl dimethylamine surfactants such as cocoamidopropyl dimethylamine; alkylpolyglycoside surfactants; polyethylene glycol esters of fatty acids, such as polyethylene glycol stearate; block copolymers of ethylene oxide and propylene oxide; salts of mono and dialkyl phosphate esters; and mixtures thereof. The additional surfactant or mixture of surfactants is usually present at a concentration of from about 0.5 to about 20 weight percent of the formulation.

Additionally, compositions optionally containing one or more additional compatible ingredients are provided herein. These additional ingredients may include, for example, one or more pesticides or other ingredients, which may be dissolved or dispersed in the composition and may be selected from acaricides, bactericides, fungicides, insecticides, herbicides, herbicide safeners, insect attractants, insect repellents, plant activators, plant growth regulators, and synergists. Also, any other additional ingredients providing functional utility such as, for example, dyes, stabilizers, fragrants, viscosity-lowering additives, compatibility agents, and freeze-point depressants may be included in these compositions.

The following Examples are presented to illustrate various aspects of the compositions and methods described herein and should not be construed as limitations to the claims.

### Example 1

### Organic colloid-stabilized oil-in-water emulsion concentrates:

Organic colloid-stabilized oil-in-water emulsion concentrates containing 5 wt% of paraffin oil, 2.5 wt% of an organic colloid, and 92.5 wt% of water were prepared. A 4-ounce (oz) (118 mL) vial was first charged with 5 g of paraffin oil (Sigma-Aldrich; St.Louis, MO) and then 2.5 g of an organic colloid (dry basis) was added as a dispersion in water. The remaining water was added to provide 100 g of a mixture containing the paraffin oil, the organic colloid and water. The mixture was then homogenized using a Vibra-Cell^{™} ultrasonic processor (Sonics & Materials, Inc.; Newtown, CT) to provide a milky-white emulsion concentrate. Table 1 lists the Michem^{®} Emulsion samples used in the compositions and methods described herein.

**Table 1: Organic Colloid Samples Used to Prepare Stabilized Oil-in-water Emulsions**

| **Organic colloid¹** | **Organic Colloid Description (all supplied in water)** | **Particle size (nm)** |
|---|---|---|
| ME70350 | 50% Cationic paraffin wax dispersion | 500 |
| ME62125 | 25% Anionic carnauba wax dispersion | 90 |
| ME34935 | 35% Anionic paraffin/ethylene acrylic acid copolymer dispersion | 275 |
| ME29730 | 30% Nonionic polyethylene dispersion | 45 |
| ME80939M | 40% Nonionic paraffin wax dispersion | 1000 |
| ME44730 | 30% Nonionic ethylene acrylic acid copolymer dispersion | 50 |
| ME09625 | 25% Cationic ethylene acrylic acid copolymer dispersion | 50 |

| | | |
|---|---|---|
| ¹Michem^{®} Emulsion samples were purchased from Michelman (Cincinnati, OH) and were used as received. | | |

### Organic colloid stabilized oil-in-water emulsions - spray samples and spray droplet analysis:

Each of the organic colloid-stabilized emulsion concentrates was diluted in water to make a 5 % v/v spray solution by diluting 15 mL of the emulsion concentrate with 285 mL of deionized water and then slightly shaking by hand until each spray sample was homogenous. The seven spray solutions (and one water control sample) were sprayed using a Teejet^{®} 8002 flat fan nozzle (Teejet Technologies; Wheaton, IL) at 40 psi (276 kiloPascal) and the spray droplet size distribution measurement was performed with a Sympatec Helos/KF high resolution laser diffraction particle sizer with an R7 lens (Sympatec GmbH; Clausthal-Zellerfeld, Germany). The tip of the nozzle was situated 12 inches (30.5 centimeters) above the path of the laser beam of the Sympatec particle sizer. The percentage of driftable fines was expressed as the volume percentage of spray droplets below 150 µm volume mean diameter (VMD) as shown in Table 2.

**Table 2: Spray Droplet Analysis of Sprays Containing Organic Colloid-stabilized Oil-in-water Emulsions**

| **Organic Colloid Used (*see* Table 1)** | **Spray Droplet VMD, µm** | **Volume Percentage of Driftable Fines <150 µm VMD** |
|---|---|---|
| None (control) - deionized water | 164 | 44 % |
| Cationic paraffin wax dispersion | 209 | 31 % |
| Anionic carnauba wax dispersion | 272 | 17 % |
| Anionic paraffin/ethylene acrylic acid copolymer dispersion | 235 | 25 % |
| Nonionic polyethylene dispersion | 280 | 15 % |
| Nonionic paraffin wax dispersion | 201 | 33 % |
| Nonionic ethylene acrylic acid | 280 | 15 % |
| copolymer dispersion | | |
| Cationic ethylene acrylic acid copolymer dispersion | 253 | 21 % |

### Example 2

### Herbicide concentrates containing organic colloid-stabilized emulsions:

Herbicide concentrates containing 456 grams acid equivalent per liter (g ae/L) 2,4-D choline, 50 grams per kilogram (g/kg) propylene glycol, and 50 g/kg of one of the organic colloid-stabilized emulsion concentrates described herein were prepared as follows. A 4-oz vial was first charged with 86.00 g of a 44.5 wt% ae 2,4-D choline salt solution in water. To the vial, 5.00 g of propylene glycol was added and the liquids were then blended by hand shaking the flask until a homogenous solution was obtained. Then, 5.00 g of an organic colloid-stabilized emulsion concentrate (containing 30 wt% paraffin oil, 14 wt% of an organic colloid, and 56 wt% of water) was added to the vial. The vial was once again hand shaken until the contents were blended and homogenous. Lastly, 4.00 g of deionized water was added to the vial to provide 100 g of the herbicide concentrate containing the organic colloid-stabilized, oil-in-water emulsion. Three samples each containing one of the organic colloids listed in Table 1 and one sample containing no organic colloid-stabilized emulsion were prepared in this manner.

### Herbicide spray samples and spray droplet analysis:

Each of the herbicide concentrates were then diluted in water to make a 1.87 % v/v spray solution of each by taking 5.61 mL of the herbicide concentrate and placing it into 294.39 mL of deionized water and then lightly shaking by hand until each spray sample was homogenous. The four samples were sprayed using the equipment and procedure described in Example 1. The percentage of driftable fines was expressed as the volume percentage of spray droplets below 150 µm volume mean diameter (VMD) as shown in Table 3.

**Table 3: Spray Droplet Analysis of Herbicide Sprays Containing 2,4-D Choline and Organic Colloid-stabilized Oil-in-water Emulsions**

| **Organic Colloid Used (Table 1)** | **Spray Droplet VMD, µm** | **Volume Percent Driftable Fines < 150 µm VMD** |
|---|---|---|
| none (control) | 163 | 45 % |
| Nonionic polyethylene dispersion | 237 | 25 % |
| Anionic carnauba wax dispersion | 225 | 28 % |
| Nonionic ethylene acrylic acid copolymer dispersion | 198 | 35 % |

### Example 3

### Organic colloid-stabilized oil-in-water emulsion concentrates prepared with styrene-butadiene latex:

Emulsion A. The following were combined in order: 20 g of deionized water, 10 g of DL 620 styrene-butadiene latex (50 wt% in water; available from Dow Chemical), and 10 g of Agnique® ME1218 (Cognis-BASF; Cincinnati, OH). After brief, mild agitation a latex-stabilized methyl soyate emulsion was obtained.

Emulsion B. The following were combined in order: 20 g of deionized water, 10 g of UCAR® 162 vinyl acrylic latex (55 wt% in water; available from Dow Chemical), and 10 g of Agnique® ME1218 (Cognis-BASF; Cincinnati, OH). After brief, mild agitation a latex-stabilized methyl soyate emulsion was obtained.

### Emulsion and herbicide spray samples, and spray droplet analysis:

Spray dilutions of Emulsions A and B were prepared by adding 1 wt% of each emulsion to deionized water or to a 2.26 wt% aqueous solution of Round-up PowerMax® (Monsanto; St.Louis, MO). The four spray solutions and two control solutions were sprayed using the equipment and procedure described in Example 1. The percentage of driftable fines was expressed as the volume percentage of spray droplets below 150 µm volume mean diameter (VMD) as shown in Table 4.

**Table 4: Spray Droplet Analysis of Sprays Containing Organic Colloid-stabilized Oil-in-water Emulsions Containing Styrene-butadiene or Vinyl-acrylic Latex**

| **Spray Samples w/ or w/o Latex Stabilized Emulsions** | **Volume Percent Driftable Fines < 150 µm VMD** |
|---|---|
| Deionized water (control) | 44.1 |
| Emulsion A + deionized water | 24.0 |
| Emulsion B + deionized water | 17.1 |
| Roundup PowerMax® (control) | 51.1 |
| Emulsion A + Roundup PowerMax® | 18.8 |
| Emulsion B + Roundup PowerMax® | 19.3 |

## Claims

1. A method to reduce spray drift during the application of an aqueous pesticidal spray mixture comprising incorporating into the aqueous pesticidal spray mixture from 0.01 to 10 weight percent of an organic colloid-stabilized oil-in-water emulsion.

2. The method of Claim 1, wherein the pesticidal spray mixture comprises at least one of a herbicide, an insecticide, and a fungicide, wherein the herbicide preferably is an auxinic herbicide, which more preferably is a water soluble salt of 2,4-D, a water soluble salt of triclopyr, a water soluble salt of dicamba, or mixtures thereof, even more preferably is a water soluble salt of 2,4-D, and still even more preferably 2,4-D choline salt or 2,4-D dimethyl ammonium salt.

3. The method of any of Claims 1-2, wherein the organic colloid-stabilized oil-in-water emulsion comprises a water-insoluble oil, an organic colloid, and water, wherein the water-insoluble oil preferably is selected from a paraffin oil, an aliphatic oil, an aromatic oil, a vegetable oil, a seed oil, an animal oil, an alkylated vegetable, seed or animal oil, or mixtures thereof.

4. An aqueous concentrate composition comprising from 0.1 to 95 weight percent of a water-soluble salt of at least one pesticide and from 0.01 to 20 weight percent of an organic colloid-stabilized oil-in-water emulsion.

5. The aqueous concentrate composition of Claim 4, wherein the organic colloid-stabilized oil-in-water emulsion comprises an oil, an organic colloid, and water, wherein the oil preferably is selected from a paraffinic oil, an aliphatic oil, an aromatic hydrocarbon oil, a vegetable oil, a seed oil, an animal oil, an alkylated vegetable, seed or animal oil, or mixtures thereof.

6. The method of any of Claims 1-3 or the aqueous concentrate of Claim 5, wherein the organic colloid is a cationic organic colloid or anionic organic colloid.

7. The method of any of Claims 1-3 or 6, wherein the organic colloid is a polymer dispersion, a copolymer dispersion, a wax dispersion or a latex, preferably a polyethylene dispersion, a polyacrylate latex, a polystyrene latex, a polystyrene-butadiene latex, or mixtures thereof.

8. The aqueous concentrate composition of any of Claims 4 or 6, wherein the organic colloid is a polyethylene dispersion, a polyacrylate latex, a polystyrene latex, a polystyrene-butadiene latex, or mixtures thereof.

9. The method or the aqueous concentrate of any of the preceding Claims, wherein the organic colloid is an anionic carnauba wax dispersion, a nonionic, polyethylene dispersion, a nonionic ethylene-acrylic acid copolymer dispersion, or mixtures thereof.

10. The method of any of Claims 1-3, 6, 7 or 9, wherein the pesticidal spray mixture further comprises glyphosate, wherein the glyphosate preferably is glyphosate dimethyl ammonium salt, glyphosate isopropyl ammonium salt, or glyphosate potassium salt, wherein more preferably the auxinic herbicide is 2,4-D choline salt or 2,4-D dimethyl ammonium salt and the glyphosate is glyphosate dimethyl ammonium salt, glyphosate isopropyl ammonium salt, or glyphosate potassium salt, wherein even more preferably the auxinic herbicide is 2,4-D choline salt or 2,4-D dimethyl ammonium salt, the glyphosate is glyphosate dimethyl ammonium salt, glyphosate isopropyl ammonium salt or glyphosate potassium salt, and the organic colloid is an anionic carnauba wax dispersion, a nonionic polyethylene dispersion, or a nonionic ethylene-acrylic acid copolymer dispersion, and wherein most preferably the auxinic herbicide is 2,4-D choline salt, the glyphosate is glyphosate dimethyl ammonium salt, and the organic colloid is a nonionic polyethylene dispersion.

11. The aqueous concentrate suspension of Claim 4, wherein the pesticide is an auxinic herbicide, which preferably is a water soluble salt of 2,4-D, more preferably 2,4-D choline salt or 2,4-D dimethyl ammonium salt.

12. The aqueous concentrate composition of any of Claims 4-6, 7-9 or 11, further comprising glyphosate and optionally, an efficacy enhancing surfactant, wherein the glyphosate preferably is glyphosate dimethyl ammonium salt or glyphosate isopropyl ammonium salt, wherein more preferably the auxinic herbicide is 2,4-D choline salt or 2,4-D dimethyl ammonium salt and the glyphosate is glyphosate dimethyl ammonium salt, or glyphosate isopropyl ammonium, wherein even more preferably the auxinic herbicide is 2,4-D choline salt or 2,4-D dimethyl ammonium salt, the glyphosate is glyphosate dimethyl ammonium salt, or glyphosate isopropyl ammonium salt, and the organic colloid is an anionic carnauba wax dispersion, a nonionic polyethylene dispersion, or a nonionic ethylene-acrylic acid copolymer latex, and wherein most preferably the auxinic herbicide is 2,4-D choline salt, the glyphosate is glyphosate dimethyl ammonium salt, and the organic colloid is a nonionic polyethylene dispersion.

13. The method of Claim 10 or the aqueous concentrate of Claim 12, wherein the auxinic herbicide is a water soluble salt of 2,4-D and the acid equivalent (AE) weight ratio of the water soluble 2,4-D salt to the glyphosate salt is from 2.3:1 to 1:2.3.

14. An aqueous concentrate composition for use as a pesticide tank-mix additive to reduce spray drift during pesticide spray applications comprising from 0.01 to 50 weight percent of an organic colloid-stabilized oil-in-water emulsion.

15. A method of preparing a spray tank mixture for use in applying a pesticidal spray with reduced spray drift comprising mixing together spray water, a pesticide concentrate or pre-mix, and an organic colloid-stabilized oil-in-water emulsion.

## Patentansprüche

1. Ein Verfahren zur Verminderung des Sprühnebelabdrifts während der Anwendung einer wässrigen pestiziden Sprühmischung umfassend das Einbringen von 0,01 bis 10 Gew.-% einer mit einem organischen Kolloid stabilisierten Öl-in-Wasser-Emulsion in die wässrige pestizide Sprühmischung.

2. Das Verfahren gemäß Anspruch 1, wobei die pestizide Sprühmischung mindestens eines von einem Herbizid, einem Insektizid und einem Fungizid umfasst, wobei das Herbizid vorzugsweise ein auxinisches Herbizid ist, welches weiterhin bevorzugt ein wasserlösliches Salz von 2,4-D, ein wasserlösliches Salz von Triclopyr, ein wasserlösliches Salz von Dicamba oder Mischungen derselben darstellt, noch bevorzugter ein wasserlösliches Salz von 2,4-D darstellt, und weiterhin bevorzugter 2,4-D-Cholinsalz oder 2,4-D-Dimethylammoniumsalz darstellt.

3. Das Verfahren gemäß einem der Ansprüche 1 bis 2, wobei die mit einem organischen Kolloid stabilisierte Öl-in-Wasser-Emulsion ein wasserunlösliches Öl, ein organisches Kolloid und Wasser umfasst, wobei das wasserunlösliche Öl vorzugsweise aus einem Paraffinöl, einem aliphatischen Öl, einem aromatischen Öl, einem Pflanzenöl, einem Samenöl, einem tierischen Öl, einem alkylierten Pflanzen-, Samen- oder tierischem Öl oder Mischungen derselben ausgewählt ist.

4. Eine wässrige Konzentratzusammensetzung umfassend 0,1 bis 95 Gew.-% eines wasserlöslichen Salzes mindestens eines Pestizids und 0,01 bis 20 Gew.-% einer mit einem organischen Kolloid stabilisierten Öl-in-Wasser-Emulsion.

5. Die wässrige Konzentratzusammensetzung gemäß Anspruch 4, wobei die mit einem organischen Kolloid stabilisierte Öl-in-Wasser-Emulsion ein Öl, ein organisches Kolloid und Wasser umfasst, wobei das Öl vorzugsweise aus einem paraffinischen Öl, einem aliphatischen Öl, einem aromatischen Kohlenwasserstofföl, einem Pflanzenöl, einem Samenöl, einem tierischen Öl, einem alkylierten Pflanzen-, Samen- oder tierischen Öl oder Mischungen derselben ausgewählt ist.

6. Das Verfahren gemäß einem der Ansprüche 1 bis 3 oder das wässrige Konzentrat gemäß Anspruch 5, wobei das organische Kolloid ein kationisches organisches Kolloid oder ein anionisches organisches Kolloid darstellt.

7. Das Verfahren gemäß einem der Ansprüche 1 bis 3 oder 6, wobei das organische Kolloid eine Polymerdispersion, eine Copolymerdispersion, eine Wachsdispersion oder einen Latex darstellt, vorzugsweise eine Polyethylendispersion, einen Polyacrylatlatex, einen Polystyrollatex, einen Polystyrol-Butadien-Latex oder Mischungen derselben.

8. Die wässrige Konzentratzusammensetzung gemäß einem der Ansprüche 4 oder 6, wobei das organische Kolloid eine Polyethylendispersion, einen Polyacrylatlatex, einen Polystyrollatex, einen Polystyrol-Butadien-Latex oder Mischungen derselben darstellt.

9. Das Verfahren oder das wässrige Konzentrat gemäß einem der vorhergehenden Ansprüche, wobei das organische Kolloid eine anionische Carnaubawachsdispersion, eine nichtionische Polyethylendispersion, eine nichtionische Ethylen-Acrylsäure-Copolymerdispersion oder Mischungen derselben darstellt.

10. Das Verfahren gemäß einem der Ansprüche 1 bis 3, 6, 7 oder 9, wobei die pestizide Sprühmischung weiterhin Glyphosat umfasst, wobei das Glyphosat vorzugsweise Glyphosatdimethylammoniumsalz, Glyphosatisopropylammoniumsalz oder Glyphosatkaliumsalz darstellt, wobei weiterhin bevorzugt das auxinische Herbizid 2,4-D-Cholinsalz oder 2,4-D-Dimethylammoniumsalz darstellt und das Glyphosat Glyphosatdimethylammoniumsalz, Glyphosatisopropylammoniumsalz oder Glyphosatkaliumsalz darstellt, wobei noch bevorzugter das auxinische Herbizid 2,4-D-Cholinsalz oder 2,4-D-Dimethylammoniumsalz darstellt, das Glyphosat Glyphosatdimethylammoniumsalz, Glyphosatisopropylammoniumsalz oder Glyphosatkaliumsalz darstellt und das organische Kolloid eine anionische Carnaubawachsdispersion, eine nichtionische Polyethylendispersion oder eine nichtionische Ethylen-Acrylsäure-Copolymerdispersion darstellt und wobei besonders bevorzugt das auxinische Herbizid 2,4-D-Cholinsalz darstellt, das Glyphosat Glyphosatdimethylammoniumsalz darstellt und das organische Kolloid eine nichtionische Polyethylendispersion darstellt.

11. Die wässrige Konzentratsuspension gemäß Anspruch 4, wobei das Pestizid ein auxinisches Herbizid darstellt, welches vorzugsweise ein wasserlösliches Salz von 2,4-D darstellt, weiterhin bevorzugt 2,4-D-Cholinsalz oder 2,4-D-Dimethylammoniumsalz.

12. Die wässrige Konzentratzusammensetzung gemäß einem der Ansprüche 4 bis 6, 7 bis 9 oder 11, weiterhin umfassend Glyphosat und wahlweise ein die Wirksamkeit steigerndes oberflächenaktives Mittel, wobei das Glyphosat vorzugsweise Glyphosatdimethylammoniumsalz oder Glyphosatisopropylammoniumsalz darstellt, wobei weiterhin bevorzugt das auxinische Herbizid 2,4-D-Cholinsalz oder 2,4-D-Dimethylammoniumsalz darstellt und das Glyphosat Glyphosatdimethylammoniumsalz oder Glyphosatisopropylammonium darstellt, wobei noch bevorzugter das auxinische Herbizid 2,4-D-Cholinsalz oder 2,4-D-Dimethylammoniumsalz darstellt, das Glyphosat Glyphosatdimethylammoniumsalz oder Glyphosatisopropylammoniumsalz darstellt und das organische Kolloid eine anionische Carnaubawachsdispersion, eine nichtionische Polyethylendispersion oder einen nichtionischen Ethylen-Acrylsäure-Copolymerlatex darstellt und wobei besonders bevorzugt das auxinische Herbizid 2,4-D-Cholinsalz darstellt, das Glyphosat Glyphosatdimethylammoniumsalz darstellt und das organische Kolloid eine nichtionische Polyethylendispersion darstellt.

13. Das Verfahren gemäß Anspruch 10 oder das wässrige Konzentrat gemäß Anspruch 12, wobei das auxinische Herbizid ein wasserlösliches Salz von 2,4-D darstellt und das Säureäquivalent(AE)-Gewichtsverhältnis des wasserlöslichen 2,4-D-Salzes zu dem Glyphosatsalz von 2,3:1 zu 1:2,3 beträgt.

14. Eine wässrige Konzentratzusammensetzung zur Verwendung als ein Pestizidtankmischungsadditiv zur Verminderung des Sprühnebelabdrifts während pestizider Sprühanwendungen, umfassend 0,01 bis 50 Gew.-% einer mit einem organischen Kolloid stabilisierten Öl-in-Wasser-Emulsion.

15. Ein Verfahren zur Herstellung einer Sprühtankmischung zur Verwendung in der Anwendung einer pestiziden Spritzbrühe mit vermindertem Sprühnebelabdrift umfassend das Miteinandervermischen von Spritzwasser, einem Pestizidkonzentrat oder einer Pestizidvormischung und einer mit einem organischen Kolloid stabilisierten Öl-in-Wasser-Emulsion.

## Revendications

1. Procédé pour réduire la dérive de pulvérisation au cours de l'application d'un mélange pesticide aqueux à pulvériser, lequel procédé comporte le fait d'incorporer, dans le mélange pesticide aqueux à pulvériser, de 0,01 à 10 % en poids d'une émulsion huile-dans-eau stabilisée par un colloïde organique.

2. Procédé conforme à la revendication 1, dans lequel le mélange pesticide à pulvériser comprend au moins un herbicide, un insecticide ou un fongicide, étant entendu que l'herbicide est de préférence un herbicide auxinique qui, mieux encore, est un sel hydrosoluble de 2,4-D, un sel hydrosoluble de triclopyr, un sel hydrosoluble de dicamba, ou un mélange de tels sels, ou qui, toujours mieux, est un sel hydrosoluble de 2,4-D, ou qui, surtout, est du sel de choline de 2,4-D ou du sel de diméthyl-ammonium de 2,4-D.

3. Procédé conforme à l'une des revendications 1 et 2, dans lequel l'émulsion huile-dans-eau stabilisée par un colloïde organique comprend une huile insoluble dans l'eau, un colloïde organique et de l'eau, étant entendu que l'huile insoluble dans l'eau est de préférence choisie parmi une huile de paraffine, une huile aliphatique, une huile aromatique, une huile végétale, une huile de graines, une huile animale, une huile végétale, de graines ou animale alkylée, et un mélange de telles huiles.

4. Composition de concentré aqueux, comprenant de 0,1 à 95 % en poids d'au moins un sel hydrosoluble de pesticide et de 0,01 à 20 % en poids d'une émulsion huile-dans-eau stabilisée par un colloïde organique.

5. Composition de concentré aqueux, conforme à la revendication 4, dans lequel l'émulsion huile-dans-eau stabilisée par un colloïde organique comprend une huile, un colloïde organique et de l'eau, étant entendu que l'huile est de préférence choisie parmi une huile de paraffine, une huile aliphatique, une huile hydrocarbure aromatique, une huile végétale, une huile de graines, une huile animale, une huile végétale, de graines ou animale alkylée, et un mélange de telles huiles.

6. Procédé conforme à l'une des revendications 1 à 3, ou concentré aqueux conforme à la revendication 5, dans lequel le colloïde organique est un colloïde organique cationique ou un colloïde organique anionique.

7. Procédé conforme à l'une des revendications 1 à 3 et 6, dans lequel le colloïde organique est une dispersion de polymère, une dispersion de copolymère, une dispersion de cire ou un latex, et de préférence, une dispersion de polyéthylène, un latex de polyacrylate, un latex de polystyrène, un latex de poly(styrène/butadiène), ou un mélange de tels dispersions ou latex.

8. Composition de concentré aqueux conforme à l'une des revendications 4 et 6, dans laquelle le colloïde organique est une dispersion de polyéthylène, un latex de polyacrylate, un latex de polystyrène, un latex de poly(styrène/butadiène), ou un mélange de tels dispersions ou latex.

9. Procédé ou concentré aqueux conforme à l'une des revendications précédentes, dans lequel le colloïde organique est une dispersion anionique de cire de carnauba, une dispersion non-ionique de polyéthylène, une dispersion non-ionique de copolymère d'éthylène et d'acide acrylique, ou un mélange de telles dispersions.

10. Procédé conforme à l'une des revendications 1 à 3, 6, 7 et 9, dans lequel le mélange pesticide à pulvériser comprend en outre du glyphosate, lequel glyphosate s'y trouve de préférence sous forme de sel de diméthyl-ammonium de glyphosate, de sel d'isopropyl-ammonium de glyphosate ou de sel de potassium de glyphosate, ou mieux encore, dans lequel l'herbicide auxinique est du sel de choline de 2,4-D ou du sel de diméthyl-ammonium de 2,4-D et le glyphosate est sous forme de sel de diméthyl-ammonium de glyphosate, de sel d'isopropyl-ammonium de glyphosate ou de sel de potassium de glyphosate, ou même encore mieux, dans lequel l'herbicide auxinique est du sel de choline de 2,4-D ou du sel de diméthyl-ammonium de 2,4-D, le glyphosate est sous forme de sel de diméthyl-ammonium de glyphosate, de sel d'isopropyl-ammonium de glyphosate ou de sel de potassium de glyphosate, et le colloïde organique est une dispersion anionique de cire de carnauba, une dispersion non-ionique de polyéthylène, ou une dispersion non-ionique de copolymère d'éthylène et d'acide acrylique, ou surtout, dans lequel l'herbicide auxinique est du sel de choline de 2,4-D, le glyphosate est sous forme de sel de diméthyl-ammonium de glyphosate, et le colloïde organique est une dispersion non-ionique de polyéthylène.

11. Suspension de concentré aqueux conforme à la revendication 4, dans laquelle le pesticide est un herbicide auxinique qui est de préférence un sel hydrosoluble de 2,4-D, et mieux encore, du sel de choline de 2,4-D ou du sel de diméthyl-ammonium de 2,4-D.

12. Composition de concentré aqueux conforme à l'une des revendications 4 à 6, 7 à 9 et 11, qui comprend en outre du glyphosate ainsi que, en option, un tensioactif améliorant l'efficacité, et dans laquelle le glyphosate se trouve de préférence sous forme de sel de diméthyl-ammonium de glyphosate ou de sel d'isopropyl-ammonium de glyphosate, ou mieux encore, dans laquelle l'herbicide auxinique est du sel de choline de 2,4-D ou du sel de diméthyl-ammonium de 2,4-D et le glyphosate est sous forme de sel de diméthyl-ammonium de glyphosate ou de sel d'isopropyl-ammonium de glyphosate, ou même encore mieux, dans laquelle l'herbicide auxinique est du sel de choline de 2,4-D ou du sel de diméthyl-ammonium de 2,4-D, le glyphosate est sous forme de sel de diméthyl-ammonium de glyphosate ou de sel d'isopropyl-ammonium de glyphosate, et le colloïde organique est une dispersion anionique de cire de carnauba, une dispersion non-ionique de polyéthylène ou un latex de copolymère d'éthylène et d'acide acrylique, ou surtout, dans laquelle l'herbicide auxinique est du sel de choline de 2,4-D, le glyphosate est sous forme de sel de diméthyl-ammonium de glyphosate, et le colloïde organique est une dispersion non-ionique de polyéthylène.

13. Procédé conforme à la revendication 10 ou concentré aqueux conforme à la revendication 12, dans lequel l'herbicide auxinique est un sel hydrosoluble de 2,4-D et le rapport en poids d'équivalent acide (EA) du sel hydrosoluble de 2,4-D au sel de glyphosate vaut de 2,3/1 à 1/2,3.

14. Composition de concentré aqueux pour utilisation en tant qu'adjuvant de pesticide pour mélange en réservoir, servant à réduire la dérive de pulvérisation au cours d'applications de pesticide par pulvérisation, comprenant de 0,01 à 50 % en poids d'une émulsion huile-dans-eau stabilisée par un colloïde organique.

15. Procédé de préparation d'un mélange à pulvériser en réservoir pour utilisation dans l'application d'un pesticide par pulvérisation avec réduction de la dérive de pulvérisation, comportant le fait de mélanger ensemble de l'eau de pulvérisation, un concentré ou un pré-mélange de pesticide, et une émulsion huile-dans-eau stabilisée par un colloïde organique.
